(19) **Europäisches Patentamt / European Patent Office / Office européen des brevets**

(11) **EP 1 979 091 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **07701271.4**

(22) Anmeldetag: **22.01.2007**

(51) Int Cl.:
**B01J 20/30** *(2006.01)* **B01J 20/22** *(2006.01)*
**B01J 20/12** *(2006.01)* **C09K 3/32** *(2006.01)*

(86) Internationale Anmeldenummer:
**PCT/AT2007/000024**

(87) Internationale Veröffentlichungsnummer:
**WO 2007/085031 (02.08.2007 Gazette 2007/31)**

(54) **VERFAHREN ZUR HERSTELLUNG EINES ÖLBINDEMITTELS**

METHOD FOR PRODUCING AN OIL-BINDING AGENT

PROCÉDÉ POUR PRÉPARER UN AGENT D'ABSORPTION D'HUILES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **25.01.2006 AT 1102006**

(43) Veröffentlichungstag der Anmeldung:
**15.10.2008 Patentblatt 2008/42**

(73) Patentinhaber: **Commerzialbank Mattersburg im Burgenland Aktiengesellschaft 7210 Mattersburg (AT)**

(72) Erfinder: **PHILIPP, Franz, Josef A-7212 Forchtenstein (AT)**

(74) Vertreter: **Patentanwälte Barger, Piso & Partner Operngasse 4 P.O. Box 96 1010 Wien (AT)**

(56) Entgegenhaltungen:
**EP-A- 1 681 331    EP-A1- 0 353 605
WO-A-95/05072    DE-A1- 2 850 624
DE-A1- 3 430 731    DE-A1- 3 728 812
DE-A1- 3 908 172    DE-A1- 4 117 916
JP-A- 7 018 290    US-B1- 6 962 616**

- **DATABASE WPI Week 198607 Derwent Publications Ltd., London, GB; AN 1986-045880 XP002434233 & JP 61 000284 A (AMACHI R) 6. Januar 1986 (1986-01-06) in der Anmeldung erwähnt**

**Beschreibung**

Die Erfindung betrifft ein Verfahren zur Herstellung eines Ölbindemittels granularer, offenporiger Struktur mit silikatkeramischer Matrix unter Verwendung von Papierfangstoff und Ton in der Rohmasse.

Ein Verfahren zum Erhalt eines ähnlichen Ölbindemittels ist aus der DE 37 28 812 A1 bekannt, wobei das Verfahren bzw. die Ausgangsstoffe relativ kostspielig sind.

Aus der EP 353 605 A1 ist ein ähnliches Bindemittel bekannt, bei dem mineralische Ausgangsstoffe, Porosierungsmittel und gegebenenfalls weitere, katalytisch wirksame Substanzen als Ausgangsstoff verwendet werden, was ebenfalls relativ kostspielig ist.

Es sind in der Praxis noch eine ganze Reihe verschiedener Ölbinder bekannt, die aus anorganischem oder auch organischem Material bestehen bzw. hergestellt sind. Aus anorganischem Material bestehende Ölbinder sind beispielsweise natürlichen silikatischen Ursprungs wie Diatomeenerde bzw. Kieselgur, Bimsstein oder dergl. oder zu silikatischen Produkten verarbeitete natürliche Materialien, jeweils überwiegend in Granulatform. Aus organischem Material gebildete Ölbinder bestehen beispielsweise u.a. aus Kunststoff, z.B. Polyurethan, Polypropylen.

In der JP 6100284 A sind Öl-absorbierende Granulate geoffenbart, die durch Granulieren und Trocknen einer Mischung aus anorganischem, tonhaltigem, organisches Bindemittel und ein lipophiles wasserabweisendes Mittel enthaltendem Feinpulver hergestellt werden. Das anorganische Pulver umfasst eine Mischung aus Schlackenschlämmen, Steinmehlschlämmen, Papierfangstoff oder Flugasche, und Ton. Eine Mischung von Sägespänen, Vermiculit oder Perlit mit dem anorganischen Feinpulver erhöht die Porosität. Das Granulat, das Öl gebunden hat, wird gesintert und gelagert oder wiederverwendet, nachdem es mit lipophilen Mitteln wieder imprägniert wurde.

Aus der JP 57165034 A ist ein poröses Material als Ölbindemittel bekannt, das aus Sägespänen und einer Mischung von pulveriger Kieselerde und Ton erhalten wird. Nach Überführung der gerührten Mischung in eine gewünschte Form erfolgt nach Trocknen ein Brennen bei hoher Temperatur und darauffolgend eine Behandlung des gebrannten Materials mit einer Hydrophobierungsflüssigkeit.

Aus JP 7018290 A und JP 7265696 A sind Ölabsorbentien bekannt, die aus Papierfangstoff, an dem Zeolith, gegebenenfalls mit Hilfe eines Bindemittels, z.B. Polyethylenglycol, angelagert ist, bestehen.

Sämtlichen vorstehend angeführten bekannten Ölbindemitteln ist jedoch zu eigen, dass zu ihrer Herstellung aufwendige Verfahrensmaßnahmen sowie der Einsatz zum Teil relativ teurer Materialien erforderlich sind. Außerdem findet der Aspekt der Verwertung eines möglichst hohen Anteils an Abfallstoffen, wie beispielsweise Klärschlamm bei der Herstellung von Ölbindemitteln keine befriedigende Berücksichtigung. Weiters sind die Einsatzmöglichkeiten der vorbekannten Ölbindemittel sowie die Effizienz der Ölbindung im Hinblick auf bisweilen mäßige Porosität nicht befriedigend.

Ölbindemittel sind im Rahmen des Umweltschutzes besonders im Fall von Mineralölverschmutzungen von Wasser oder Erdreich unverzichtbare Mittel zur Beseitigung oder zumindest der Begrenzung der beispielsweise zur Ölpest führenden Verschmutzungsursachen geworden. Diesen Aspekt ebenso wie eine ökologische Beseitigung von Abfallstoffen hat sich vorliegendenfalls die Anmelderin auch im Bestreben der Verwertung von Abfallstoffen zur Aufgabe gemacht, unter Mitverwendung von Abfallstoffen Ölbindemittel mit weitreichenden Einsatzmöglichkeiten sowie hohem Bindungsvermögen für Öl herzustellen.

Es ist somit Aufgabe der Erfindung, ein wirtschaftlich günstiges Verfahren zur Herstellung eines Ölbindemittels granularer, offenporiger Struktur, welches alle Bedingungen in Bezug auf das Ölbindevermögen und die Eluationseigenschaften erfüllt sind und wobei Abfallstoffe verwendet werden, zur Verfügung zu stellen,

Unter der Bezeichnung "Ölbinder" bzw. "Ölbindemittel" werden im Folgenden nicht nur Bindemittel für Mineralöle, ölartige Produkte oder flüssige Kohlenwasserstoffe sondern auch Chemikalien verstanden.

Diese Aufgabe wird bei einem Verfahren der eingangs genannten Art dadurch gelöst, dass, jeweils bezogen auf die gesamte Rohmasse, 35 - 60 Gew.-% Klärschlamm mit einem Wassergehalt zwischen 70 und 85 Gew.-%, 25 - 55 Gew.-% Papierfangstoff mit einem Wassergehalt zwischen 35 und 55 Gew.-%, 10 - 25 Gew.-% Ton und gegebenenfalls 1 - 3 Gew.-% Zeolith, 1 - 2 Gew.-% Branntkalk und/oder bis zu 3 Gew.-% Flugasche zu einer homogenen Mischung vermischt werden und danach die erhaltene Rohmasse zu Partikeln mit einem mittleren Durchmesser von 4 - 6 mm verarbeitet wird, worauf eine Trocknung der Partikel erfolgt, die daran anschließend bei 950 - 1050° C gebrannt werden.

Der Anteil an Klärschlamm kann aber durchaus, insbesondere im Hinblick auf spezielle Einsatz- und Herstellungsmöglichkeiten des Ölbindmittels auch noch 35 Gew.-%, bezogen auf die gesamte Rohmasse, um bis zu 15 Gew.-% unterschreiten, so dass danach der Klärschlammanteil insgesamt im Bereich zwischen 20 - 60 Gew.-% zu liegen kommt.

Der Vorteil des verfahrensgemäß herstellbaren Ölbindemittels liegt einerseits darin, dass damit eine äußerst zweckmäßige Verwertung von Abfallstoffen erfolgt und andererseits ein Ölbinder erzeugt wird, der alle Voraussetzungen, insbesondere Ölbindevermögen und Eluateigenschaften eines Ölbinders, beispielsweise vom Typ III nach deutscher Norm, erfüllt.

Das Verfahren gemäß der Erfindung ist ferner dadurch gekennzeichnet, dass zur Bildung der organische und mineralische Bestandteile umfassenden Mischung zumindest die mineralischen Bestandteile mit einer Teilchengröße < 100 μm eingesetzt werden.

Eine Ausführungsform der Erfindung besteht darin, dass kommunaler, teilentwässerter Klärschlamm mit einem Wassergehalt von etwa 70 bis 85 Gew.-% und einem Anteil an organischem Material von etwa 40 bis 60 Gew.-% bezogen auf die Gesamttrockenmasse eingesetzt wird. Desweiteren wird erfindungsgemäß ein Papierfangstoff, dessen Wassergehalt zwischen 35 und 55 Gew.-% beträgt, mit einem Organikanteil von etwa 70 bis 90 Gew.-% bezogen auf die Gesamtmasse eingesetzt.

Erfindungsgemäß ist vorgesehen, dass der Ton in Form von Tonmehl mit einer Teilchengröße von < 100, insbesondere 60 μm eingesetzt wird.

Gemäß einer Ausführungsform des Verfahrens ersetzt erfindungsgemäß Branntkalk und/oder Flugasche im entsprechenden Anteil den Papierfangstoff. Jedenfalls dienen sowohl Branntkalk als auch Flugasche als Ionendonatoren und Stabilisatoren für die Viskosität der Mischung.

Nach einem weiteren Merkmal des erfindungsgemäßen Verfahrens wird der Ton bis zu 3 Gew.-% bezogen auf den Tonanteil durch ein Lignin oder Ligninderivat-Ton-Vorgemisch ersetzt, das vorteilhafterweise bis zu 10 Gew.-% Lignin oder Ligninderivat bezogen auf den Gesamtanteil des Vorgemischs enthält.

Nach weiteren Merkmalen des erfindungsgemäßen Verfahrens wird die Rohmasse unter Bildung von spaghettiförmigen Partikeln extrudiert oder es kann die Rohmasse auch unter Bildung von Pellets weiterverarbeitet werden.

Die nach der Erfindung verfahrensgemäß hergestellten Ölbindemittel weisen eine Schüttdichte zwischen 0,4 und 0,75 kg/l sowie ein Ölbindevermögen von 0,7 bis 1,0 1 Öl pro kg Ölbinder auf.

Der in der zuzubereitenden Mischung einzusetzende kommunale Klärschlamm wird einmal auf einen Wassergehalt zwischen etwa 70 und 85 Gew.-%, bestimmt nach DIN bzw. ÖNORM, beispielsweise mittels einer Kammerfilterpresse oder Zentrifugieren teilentwässert. In einem ersten Verfahrensschritt werden der teilentwässerte Klärschlamm, der Papierfangstoff, auf < 100, insbesondere 60 μm vermahlener Ton und Zeolith, deren Vermischung vorteilhafterweise zuvor gemeinsam erfolgt, in den angegebenen Mengenbereichen in einer Mischanlage innig miteinander zur Herstellung einer Rohmasse hoher Homogenität vermischt.

Die Mischung kann chargenweise erfolgen. Eine chargenweise Dosierung und ebenso chargenweise (Durch-) Mischung der Mischungskomponenten ermöglichen ein Höchstmaß an Homogenität der Rohmasse. Ein Beleg für den Homogenitätsgrad ist eine genaue statistische Verteilung der Einzelkomponenten in jeder beliebigen Teilmenge der frischen Rohmasse, wie sie dann zur Weiterverarbeitung verwendet wird.

Die Rohmasse, die rechtlich definitionsgemäß einen Sekundärrohstoff darstellt, ist im Fertigzustand eine steifpastöse Masse, die eine Homogenität überwiegend im 10er (< 100) μm-Bereich (>50 %) bis 100er μm-Bereich aufweist.

Bedarfsweise kann dem Ton Lignin bzw. ein Ligninderivat oder ein Lignin bzw. Ligninderivat/Bentonit-Gemisch in Gewichtsanteilen bis zu 3 % zugemischt werden, wobei der Tonanteil um diesen Betrag vermindert wird.

Die erhaltene Rohmasse wird dann entweder mit einer Pelletiereinrichtung zur Herstellung eines Granulats mit normgerechter Körnung nach dem Brand (90 % < 4mm) weiterverarbeitet. Die Rohmasse kann aber auch zu endlosen zylindrischen, spaghettiförmigen Gebilden mittels einer Schneckenpresse verarbeitet werden, wobei die Extrusion beispielsweise mit einem Siebmundstück, dessen Lochweite 4,5 - 5 mm beträgt und ebenfalls im Rahmen der Weiterverarbeitung durch Brennen und gegebenenfalls Brechen zu einem normgerechten Durchmesser eines schließlich erhaltenen Granulats mit einer zuvor angegebenen Körnung führt.

Die Formgebung der Rohmasse kann aber auch ziegeleitechnisch erfolgen, wobei jedoch in diesem Fall die erhaltenen ziegelförmigen Körper nach dem Brand jedenfalls zu Granulat mit normgerechter Korngrößenverteilung zerkleinert werden müssen.

Die verarbeitete Rohmasse wird gegebenenfalls nach separater Vortrocknung in einem Ofen, z.B. einem Drehrohrofen oder Tunnelofen, insbesondere bei ziegeleitechnischer Verarbeitung der Rohmasse, gebrannt, wobei die Brenntemperatur bei ca. 950 - 1050° C beträgt. Beim Brennen der Rohmasse verflüchtigen sich Wasser und die Organikbestandteile des Klärschlamms und Papierfangstoffs. Als Ergebnis liegt schließlich ein körniges Produkt (Korngröße < 4 mm) eines hochporösen silikatkeramischen Materials vor. Dieses erhaltene Produkt ist direkt seiner Verwendung als Ölbindmittel zuführbar.

Bezüglich der Eigenschaften und Funktion der Mischungskomponenten wird im einzelnen Folgendes bemerkt:

Klärschlamm

Der Klärschlamm weist nach Entwässerung, je nach Verfahren, einen Wassergehalt (bestimmt nach DIN bzw. ÖNORM) von etwa 70-85 Gew.-% auf. Der Anteil an organischem Material liegt bei kommunalem Klärschlamm bei etwa 40-60 Gew.-% der Trockenmasse. Die Funktion des Klärschlamms ist, als Ausbrennstoff (gemeinsam mit Papierfangstoff) beim Brand entsprechende Porosität des Ölbindemittels zu verursachen. Der mineralische Anteil des Klärschlamms trägt zur keramischen Matrix des Ölbindemittels bei.

Papierfangstoff

Der hier verwendete Papierfangstoff weist Wassergehalte von ca. 35-55 Gew.-% auf. Der organische Anteil liegt bei etwa 70-90 Gew.-% (der Trockenmasse). Der Papierfangstoff ist ein Ausbrennstoff wie der Klärschlamm und dient ebenfalls als Porosierungsmittel. Mineralische Anteile tragen zur keramischen Matrix des Ölbindemittels bei.

Tonmehl

Wesentliche Funktion des Tonmehls ist die Bildung der keramischen Matrix (des keramischen Gerüstes) des Ölbindemittels beim Brand. Zusätzlich reduziert der Ton die Schadstoffmobilität, insbesondere bei der Rohmasse. Mineralogisch handelt es sich bei dieser Komponente um im Wesentlichen illitisch-kaolinitische, calcit/aragonit- und dolomitfreie Tone durchschnittlicher Zusammensetzung.

Zeolith

Zeolithmehl dient der Schadstoffbindung (bes. Schwermetalle), sowie der Geruchsverminderung der Rohmasse. Gleichzeitig trägt es zur Bildung der keramischen Matrix bei.

Branntkalk und Flugasche:

Diese beiden Komponenten dienen als Wasserregulativ und damit zur Stabilsierung und Regulierung der Viskosität der Mischung, aber ebenso als Ionendonatoren.

Mineralisch-organisches Additiv

Das aus einer Mischung von Lignin und Bentonit bestehende Additiv fördert die Bildung der keramischen Struktur (Porosität und keramische Matrix) und trägt zur Reduktion der Schadstoffmobilität, insbesondere der Rohmasse, bei.

Wie raster-elektronenmikroskopische Untersuchungen zeigen, stellt das durch Brand erzeugte Produkt, durch Ausgasung des Wassers als Wasserdampf und vor allem durch Ausbrand der organischen Substanzen ein hochporöses keramisches, als Ölbindemittel einsetzbares Produkt dar, mit durchgängig offenen Poren mit Porendurchmessern im 1er bis 100er $\mu$m-Bereich. Die Schüttdichte des Ölbindmittels liegt je nach Mischungsverhältnissen und Verarbeitungsweise der Rohmasse zwischen 0,42 und 0,75 kg/l.

Die Korngrößenverteilung ist normgerecht:

$$> \ 4\mathrm{mm} < 10\,\%$$

$$0{,}125 - 4 \ \mathrm{mm} > 90\,\%$$

$$< 0{,}125 \ \mathrm{mm} < 10\,\%$$

Das Ölbindvermögen beträgt zwischen 0,7 und 1,01 Standardöl/kg Ölbinder.

Beispiele für die Produkteigenschaften von erfindungsgemäß hergestellten Ölbindemittel:

Beispie 1:

Ölbindemittel A:

a) Mischungszusammensetzung:

| Klärschlamm, kommunal, teilentwässert, (Zentrifuge) | Papierfangstoff | Tonmehl (< 60 $\mu$m) | Zeolithmehl (< 60 $\mu$m) |
|---|---|---|---|
| 56% | 28 % | 15 % | 1 % |

b) Chemische Zusammensetzung:

Ergebnisse der Messung mit RFA

| Messung | 1 | 3 |
|---|---|---|
| **Oxid** | % | % |
| TiO2 | 0,88 | 0,88 |
| Al2O3 | 20,9 | 20,9 |
| Fe2O3 | 8,31 | 8,29 |
| SiO2 | 56,1 | 55,9 |
| MnO | 0,17 | 0,17 |
| MgO | 2,62 | 2,59 |
| CaO | 2,77 | 2,76 |
| Na2O | 0,05 | 0,03 |
| K2O | 3,40 | 3,42 |
| P2O5 | 3,57 | 3,56 |
| Cr2O3 | 0,036 | 0,036 |
| Summe | 98,83 | 98,49 |
| Glühverlust | 0,02 | 0,02 |

Klärschlamm: Wassergehalt 81,5 Gew.-%; organischer Anteil an der Trockenmasse 56,7 Gew.-%;
Papierfangstoff: Wassergehalt 54,9 Gew.-%

c) Herstellungsverfahren: Extrusion und Brand im Drehrohrofen
d) Mineralbestand des Ölbinders, Hauptkomponenten (Röntgendiffraktometrie):

Quarz: ca. 17 Gew.%;
Hämatit: ca. 8 Gew.%;
Feldspäte (Plagioklas, Kalifeldspat) geringer Kristallinität sowie
+/- röntgenamorphe, feldspatähnliche alumosilikatische Verbindungen und weitere röntgenamorphe Verbindungen

e) Ölbinderdaten:

| Schüttdichte | Ölbindevermögen |
|---|---|
| 420 g/l | 1 kg Ölbinder bindet 0,700 l Öl |

Der Ölbinder erfüllt alle Voraussetzungen (insbesondere Ölbindevermögen und Eluateigenschaften) eines Ölbinders vom Typ III nach deutscher Norm.

Beispiel 2:

Ölbindemittel B:

Mischungszusammensetzung:

| Klärschlamm, kommunal, teilentwässert, (Kammerfilterpresse) | Papierfangstoff | Ton* (< 60 μm) | Zeolith** (< 60 μm) |
|---|---|---|---|
| 56% | 28% | 15 % | 1 % |

Klärschlamm: Wassergehalt 74,2 Gew.-%; organischer Anteil an der Trockenmasse 56,7 Gew.-%
*Tonmehl; ** Zeolithmehl

Herstellungsverfahren: Extrusion und Brand im Drehrohrofen

Beispiel 3:

a) Mischungszusammensetzung:

| Klärschlamm | : | 37,7 Gew.-% |
|---|---|---|
| Papierfangstoff | : | 47,0 Gew.-% |
| Ton | : | 10,5 Gew.-% |
| Branntkalk | : | 1,5 Gew.-% |
| Flugasche | : | 3,0 Gew.-% |
| Lignin | : | 0,3 Gew.-% |

b) Ölbinderdaten:
b1) Korngrößenverteilung:

| Parameter | Einheit | Ergebnisse |
|---|---|---|
| Grobkornanteil > 4 mm | Gew.-% | < 0,1 |
| 4 mm - 0,5 mm | Gew.-% | 82,0 |
| 0,5 mm-0,125 mm | Gew.-% | 17,8 |
| Feinkornanteil < 0,125 mm | Gew.-% | 0,2 |

b2) Schüttdichte  b3) Ölbindevermögen
690 g/l  1 kg Ölbinder bindet 0,997 l Öl

Der Ölbinder erfüllt alle Voraussetzungen (insbesondere Ölbindevermögen und Eluateigenschaften) eines Ölbinders vom Typ III nach deutscher Norm.
b4) Prüfergebnisse des Eluats:

| | |
|---|---|
| pH-Wert | 11 |
| Elektrische Leitfähigkeit | 600 $\mu$S/cm |
| TOC | 4,9 mg/l |
| Phenolindex | <0,01 mg/l |
| Arsen | <0,01 mg/l |
| Blei | <0,02 mg/l |
| Cadmium | <0,002 mg/l |
| Chrom-VI | <0,01 mg/l |
| Kupfer | 0,03 mg/l |
| Nickel | 0,013 mg/l |
| Quecksilber | <0,0005 mg/l |
| Zink | 0,01 mg/l |
| Fluorid | 0,47 mg/l |
| Ammonium | <0,5 mg/l |
| Cyanide, leicht freisetzbar | <0,01 mg/l |
| AOX | 0,033 mg/l |
| wasserlöslicher Anteil | 0,49 % |

**Patentansprüche**

1. Verfahren zur Herstellung eines Ölbindemittels granularer, offenporiger Struktur mit silikatkeramischer Matrix unter Verwendung von Papierfangstoff und Ton in der Rohmasse, **dadurch gekennzeichnet, dass**, jeweils bezogen auf die gesamte Rohmasse, 35 - 60 Gew.-% Klärschlamm mit einem Wassergehalt zwischen 70 und 85 Gew.-%, 25 - 55 Gew.-% Papierfangstoff mit einem Wassergehalt zwischen 35 und 55 Gew.-%, 10 - 25 Gew.-% Ton und gegebenenfalls 1 - 3 Gew.-% Zeolith, 1 bis 2 Gew.-% Branntkalk und/oder bis zu 3 Gew.-% Flugasche zu einer homogenen Mischung vermischt werden und danach die erhaltene Rohmasse zu Partikeln mit einem mittleren Durchmesser von 4 - 6 mm verarbeitet wird, worauf eine Trocknung der Partikel erfolgt, die daran anschließend bei 950 - 1050° C gebrannt werden.

2. Verfahren nach Anspruch 1, **dadurch gekennzeichnet, dass** zur Bildung der organische und mineralische Bestandteile umfassenden Mischung zumindest die mineralischen Bestandteile mit einer Teilchengröße < 100 $\mu$m eingesetzt werden.

3. Verfahren nach Anspruch 1 oder 2, **dadurch gekennzeichnet, dass** kommunaler. teilentwässerter Klärschlamm mit einem Wassergehalt von etwa 75 bis 80 Gew.-% und einem Anteil an organischem Material von etwa 50 bis 60 Gew.-% bezogen jeweils auf die Gesamttrockenmasse eingesetzt wird.

4. Verfahren nach Anspruch 1 oder 2, **dadurch gekennzeichnet, dass** Papierfangstoff mit einem Organikanteil von etwa 70 bis 90 Gew.-% bezogen auf Gesamtmasse eingesetzt wird.

5. Verfahren nach Anspruch 1, **dadurch gekennzeichnet, dass** der Ton in Form von Tonmehl mit einer Teilchengröße von < 100$\mu$m, insbesondere 60 $\mu$m eingesetzt wird.

6. Verfahren nach Anspruch 1, **dadurch gekennzeichnet, dass** Branntkalk und/oder Flugasche im entsprechenden Anteil den Papierfangstoff ersetzt.

7. Verfahren nach Anspruch 1, **dadurch gekennzeichnet, dass** der Ton bis zu 3 Gew.-% bezogen auf den Tonanteil durch ein Lignin oder Ligninderivat-Ton-Vorgemisch ersetzt wird.

8. Verfahren nach Anspruch 7, **dadurch gekennzeichnet, dass** das Lignin oder Ligninderivat-Ton-Vorgemisch bis zu 10 Gew.-% Lignin oder Ligninderivat bezogen auf den Gesamtanteil des Vorgemischs enthält.

9. Verfahren nach einem der Ansprüche 1 bis 3, **dadurch gekennzeichnet, dass** die Rohmasse unter Bildung von spaghettiförmigen Partikeln extrudiert wird.

10. Verfahren nach einem der Ansprüche 1 bis 3, **dadurch gekennzeichnet, dass** die Rohmasse unter Bildung von Pellets weiterverarbeitet wird.

**Claims**

1. The invention claimed is: 1. A method of producing an oil-binding agent of granular, open-porous structure having a silicate-ceramic matrix by using recovered paper material and clay in the raw mixture the method comprising the steps of sequentially:

   forming a total raw mass by mixing 35 to 60% by weight sewage sludge with a water content between 70 and 85% by weight, 25 to 55% by weight recovered paper material with a water content between 35 and 55% by weight, and 10 to 25% by weight clay, into a homogeneous mixture,
   processing the raw mass thus obtained into particles with an average diameter of 4 to 6 mm, and
   drying and then firing the particles at 950 to 1010° C.

2. The method according to claim 1, further comprising the step of:

   using mineral components with a particle size less than 100 $\mu$m for forming the mixture, which includes organic and mineral components.

**3.** The method according to claim 1 further comprising:

using partially drained municipal sewage sludge that has a water content of approximately 75 to 80% by weight and a portion of organic material of approximately 50 to 60% by weight, relative to the total dry mass.

**4.** The method according to claim 1, further comprising the step of
using recovered paper material that has an organic portion of approximately 70 to 90% by weight relative to the total mass.

**5.** The method according to claim 1, further comprising the step of:

using clay in the form of powdered clay with a particle size less than 100 $\mu$m, in particular 60 $\mu$m.

**6.** The method according to claim 1, further comprising the step of:

replacing the recovered paper material in a corresponding proportion with quicklime and/or fly ash.

**7.** The method according to claim 1, further comprising the step of
replacing the clay up to 3% by weight by a lignin or a premixture of a lignin derivative and clay.

**8.** The method according to claim 7 wherein the lignin derivative/clay premixture contains up to 10% by weight lignin or lignin derivative relative to the total proportion of the premixture.

**9.** The method according to claim 1, further comprising the step of
extruding the raw mass to form cylindrical extrudates of indeterminate length.

**10.** The method according to claim 1, further comprising the step of:

further processing the raw mass to form pellets.


**Revendications**

**1.** Procédé de fabrication d'un agent de liaison d'huiles de structure granulaire à pores ouverts comprenant une matrice de silicate-céramique en utilisant de la pâte à papier récupérée et de l'argile dans la masse brute, **caractérisé en ce qu'**à chaque fois par rapport à la masse brute entière, 35 à 60 % en poids de boues d'épuration ayant une teneur en eau comprise entre 70 et 85 % en poids, 25 à 55 % en poids de pâte à papier récupérée ayant une teneur en eau comprise entre 35 et 55 % en poids, 10 à 25 % en poids d'argile et éventuellement 1 à 3 % en poids de zéolithe, 1 à 2 % en poids de chaux calcinée et/ou jusqu'à 3 % en poids de cendres volantes sont mélangées en un mélange homogène, puis la masse brute obtenue est transformée en particules ayant un diamètre moyen de 4 à 6 mm, un séchage des particules a lieu, et celles-ci sont ensuite brûlées à une température de 950 à 1 050 °C.

**2.** Procédé selon la revendication 1, **caractérisé en ce que**, pour la formation du mélange comprenant des constituants organiques et minéraux, au moins les constituants minéraux sont utilisés en une taille de particule < 100 $\mu$m.

**3.** Procédé selon la revendication 1 ou 2, **caractérisé en ce que** des boues d'épuration communales partiellement déshydratées ayant une teneur en eau d'environ 75 à 80 % en poids et une proportion de matières organiques d'environ 50 à 60 % en poids, à chaque fois par rapport à la masse sèche totale, sont utilisées.

**4.** Procédé selon la revendication 1 ou 2, **caractérisé en ce qu'**une pâte à papier récupérée ayant une proportion organique d'environ 70 à 90 % en poids, par rapport à la masse totale, est utilisée.

**5.** Procédé selon la revendication 1, **caractérisé en ce que** l'argile est utilisée sous la forme d'une farine d'argile ayant une taille de particule < 100 $\mu$m, notamment de 60 $\mu$m.

**6.** Procédé selon la revendication 1, **caractérisé en ce que** la chaux calcinée et/ou les cendres volantes remplacent la pâte à papier récupérée en la proportion correspondante.

7. Procédé selon la revendication 1, **caractérisé en ce que** l'argile est remplacée à hauteur de jusqu'à 3 % en poids, par rapport à la proportion d'argile, par un pré-mélange de lignine ou d'un dérivé de lignine et d'argile.

8. Procédé selon la revendication 7, **caractérisé en ce que** le pré-mélange de lignine ou d'un dérivé de lignine et d'argile contient jusqu'à 10 % en poids de lignine ou de dérivé de lignine par rapport à la proportion totale du pré-mélange.

9. Procédé selon l'une quelconque des revendications 1 à 3, **caractérisé en ce que** la masse brute est extrudée pour former des particules en forme de spaghettis.

10. Procédé selon l'une quelconque des revendications 1 à 3, **caractérisé en ce que** la masse brute est transformée pour former des pastilles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3728812 A1
- EP 353605 A1
- JP 6100284 A
- JP 57165034 A
- JP 7018290 A
- JP 7265696 A